# EUROPEAN PATENT SPECIFICATION

(11) **EP 0 767 742 B1**
(45) Date of publication and mention of the grant of the patent: **04.11.1998**
(21) Application number: 95922674.7
(22) Date of filing: 26.06.1995
(51) Int. Cl.: B44C 1/16

(54) **DECAL APPLICATION APPARATUS**
VORRICHTUNG ZUM AUFTRAGEN VON ABZIEHBILDERN
APPAREIL D'APPLICATION DE DECALCOMANIES

(30) Priority: 25.06.1994 GB 9412832
(43) Date of publication of application: 16.04.1997
(73) Proprietor: SERVICE (ENGINEERS) PLC, Stoke-on-Trent, Staffordshire ST6 2LB (GB)
(72) Inventor: PASS, Peter, Allan Service (Engineers) plc, Staffordshire ST6 2LB (GB); RATHBONE, Christopher, Charles, Stoke-on-Trent Staffordshire ST3 1DD (GB)
(74) Representative: Sales, Robert Reginald
(86) International application number: GB9501503
(87) International publication number: WO9600153

(56) References cited:
- GB-A- 2 141 384
- GB-A- 2 193 927
- US-A- 4 049 479

## Description

This invention relates to decal application apparatus according to the preamble of claim 1.

This invention also relates to a method of decoration according to the preamble of claim 15.

One such apparatus and method is disclosed in patent document GB 2 193 927 A.

By virtue of their nature, the size of ceramic articles cannot usually be wholly accurately reproduced. Differences in size can occur during firing and/or as a result of wear to a mould or other conditions such as variations in the clay used. Furthermore, ceramic articles do not usually conform to exact shapes. For example, whilst the outline of a plate may appear circular, usually the plate is not wholly circular.

Accordingly, difficulties are often encountered when applying an "edge to edge" decoration to a ceramic article which covers the whole of an area on the article between opposite edges. In view of the differences in size and shape which are likely to be encountered in different articles, conventionally water slide transfers are used which are slightly undersized. These transfers can then be stretched to fully cover the area to be decorated. The application of such transfers is a difficult task and therefore a skilled lithographer is required. Applying such a transfer is relatively time consuming as for example all air must be removed from between the transfer and the article being decorated. Fairly high levels of wastage generally occur in such a process.

Items which require edge to edge decoration traditionally include wall plaques. Furthermore, such decoration may be required on other items of flatware such as plates and may also be desirable on items of holloware such as mugs.

Edge to edge decoration is often required on articles with a decorated edge, such as a gold or silver band applied around the rim of a plate. If water slide decals are not to be used, decals such as those of the heat release type are required to be initially applied and fired onto the article prior to application of the banding and hence further firing. It would be advantageous if a decal could be applied other than by hand onto an already banded article, such that only one firing would generally be required.

According to the present invention there is provided decal application apparatus, the apparatus comprising means for removing from an article which has had a decal applied to it which extends beyond the edge of the article, said part of the decal which extends therebeyond.

The apparatus includes a blade for removing said part of the decal. Means are provided to permit relative rotation between the blade and the article and for urging the blade against the article during rotation. A rotatable mounting is preferably provided upon which the article is located.

The blade is preferably provided on a sprung mounting to permit removal of said part of the decal from a non-circular article.

The inclination of the blade relative to the mounting is preferably variable, and may be varied during cutting of said part. The apparatus may be arranged such that the inclination of the blade moves between two predetermined orientations during use of the apparatus. Said predetermined orientations are preferably adjustable.

The apparatus preferably comprises means for urging said part of the decal to a generally horizontal alignment to ease cutting thereof. The urging means may comprise a brush engageable with said part of the decal.

Means are preferably provided for receiving said part of the decal following removal from the article, and the receiving means may comprise a suction removal arrangement.

The apparatus is preferably automatically operable to receive a decorated article, remove said part of the decal, and subsequently pass said article on to permit another article to be received.

The apparatus is preferably locatable downstream of a heat release decal application machine so as to receive decorated articles from said machine.

The apparatus may also comprise means for locating a decal on an article such that a part of the decal extends beyond an edge of the article.

According to a further aspect of the present invention there is provided a method of decorating an area on an article with a decal according to claim 15.

The area preferably extends from one edge of the article to another edge.

The decal preferably comprises a heat release decal which is applied from a release member of a decal applying apparatus.

Only the part of the decal which covers said area is preferably applied from the release member to the article, with the remainder of the decal remaining on the release member. Said remainder of the decal is preferably subsequently removed from the release member, desirably by application on to a waste receiving member which could comprise a sheet of paper.

Alternatively, the whole of the decal can be applied from the release member such that the decal extends beyond the area. An excess receiving member may be provided around the area to receive the excess decal. The excess receiving member may comprise for example paper and a former may be provided to support the excess receiving member.

The article may be a ceramic article and the method may comprise subsequently firing the article.

Embodiments of the present invention will now be described by way of example only, with reference to the accompanying drawings, in which:-
Fig. 1 is a diagrammatic side view of apparatus according to the present invention; and
Fig. 2 is a plan view of the apparatus of Fig. 1.

Conventionally, heat release decals are held prior to application on a heated plate by vacuum, with the heated plate melting the heat sensitive adhesive. The decals are picked up from the plate by a tacky flexible silicone pad. The decals are subsequently applied to articles to be decorated. The decals are applied from the centre of the pad outwards thereby preventing any air from being trapped between the decal and the article. Upon contact with the cold articles the heat sensitive adhesive solidifies bonding the decal thereto. The decals are subsequently fired on to the articles.

In a first embodiment of said further aspect of the invention, a wall plaque is provided with edge to edge decoration by a heat release decal. The decal is made so as to be larger than the face of the plaque so that it can overlap therearound. No cover coat is provided on the decal. The decal is applied to the face of the plaque from a flexible pad in the usual manner. Only the part of the decal which contacts the plaque is taken up thereby from the pad. The edge of the decal which does not contact the plaque remains on the pad. The part of the decal remaining on the pad is removed by pressing the pad on to an excess receiving member such as a sheet of paper. As the heat release decal does not require to be slid on to the article unlike water slide decals, a cover coat in this instance is not necessary to protect the colours in the decal.

In a second embodiment of said further aspect, a similar method is used but in this instance a relatively thin essentially inelastic cover coat is provided on the decal. A ring of paper is provided immediately around the edge of the face of the plaque. A former is provided beneath the paper to provide support there for. When the decal is applied by the pad on to the plaque the excess part of the decal which extends beyond the plaque is taken up by the paper.

In a third embodiment of said aspect of the invention, again a similar method is used. In this instance however a relatively thick friable inelastic cover coat is provided on the decal. When the decal is applied on to the ware the whole of the decal will be taken from the pad such that the decal will extend beyond the edge of the plaque. The excess decal can be cut from around the edge of the plaque using a spinning knife or other suitable arrangement.

There is thus described a method which permits edge to edge decoration to be applied using heat release decals. These decals can readily be applied automatically thereby removing the requirement for skilled lithographers. Furthermore, the amount of wastage will be reduced when using such decals.

The drawings show apparatus 10 for trimming excess decal which extends beyond the edge of an item of flatware such as a plate 12. The apparatus 10 comprises a rotatable turntable 14 upon which the plate 12 is mountable. Suction means (not shown) are provided for holding the plate 12 on the turntable 14.

A blade 16 is mounted on the end of an arm 18 so as to generally contact the edge of the plate 12. The blade 16 is provided on a sprung mounting 20 on the end of the arm 18 so as to be urged against the side of the plate 12 but to be movable outwardly against the force of the mounting as shown in the direction of the arrow 22. The blade 16 is mounted on the arm 18 such that it can be periodically slid up or down to provide wear across different parts of the blade 16.

The arm 18 can be rotated about a substantially horizontal axis as shown by the arrow 24 for a purpose hereinafter to be described. Adjustable stops (not shown) may be provided to limit the rotation in the direction about the arrow 24. The arm 18 is rotatably mounted about a vertically upstanding bar 26 so as to be pivotal towards or away from the plate 12 in the direction as shown by the arrow 28.

A brush 30 is provided adjacent the point of contact between the blade 16 and plate 12. Means are provided for selectively moving the brush 30 to be engageable with the upper edge of the plate 12 in the direction shown by the arrow 32. Located to extend beneath the brush 30 and blade 16 is a waste receiving receptacle 34 connected to a suction supply (not shown).

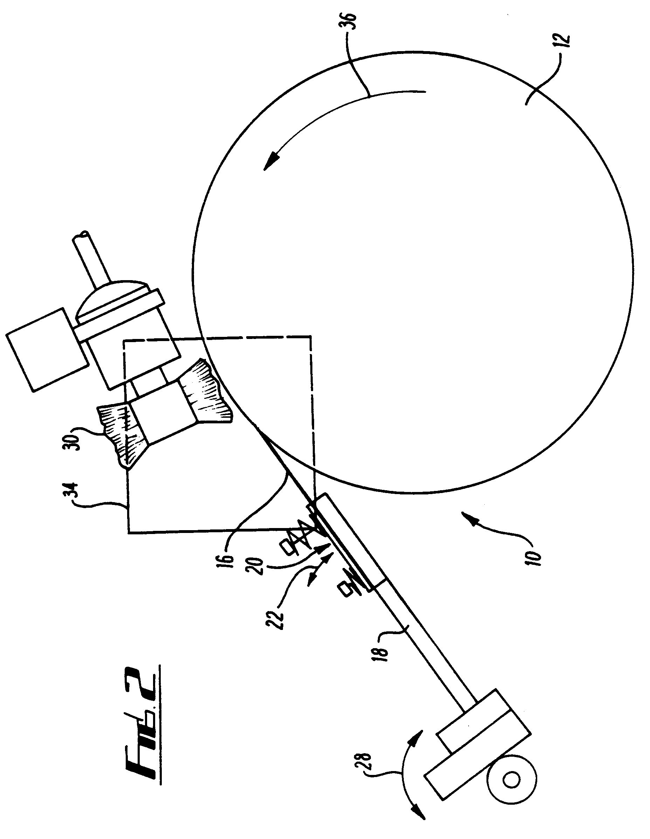

In use, when the plate 12 is to be decorated, an oversized heat release decal is applied onto the plate 12 to extend beyond the edge thereof around the plate 12. The edge of the decal extending beyond the plate 12 will generally adopt a generally upstanding orientation. The plate 12 is transferred onto the turntable 14 and held thereon. The turntable 14 is rotated in the direction of the arrow 36 as shown in Fig. 2. The brush 30 is brought into contact with the upper surface of the edge of the plate 12 to urge the excess decal into a generally horizontal alignment so as to be cut from around the edge of the plate by the blade 16. Once the plate 12 has completed a full revolution the decal will extend across the whole upper surface thereof and end precisely at the edge thereof. The decals usable with such apparatus would generally be of the third embodiment as described above.

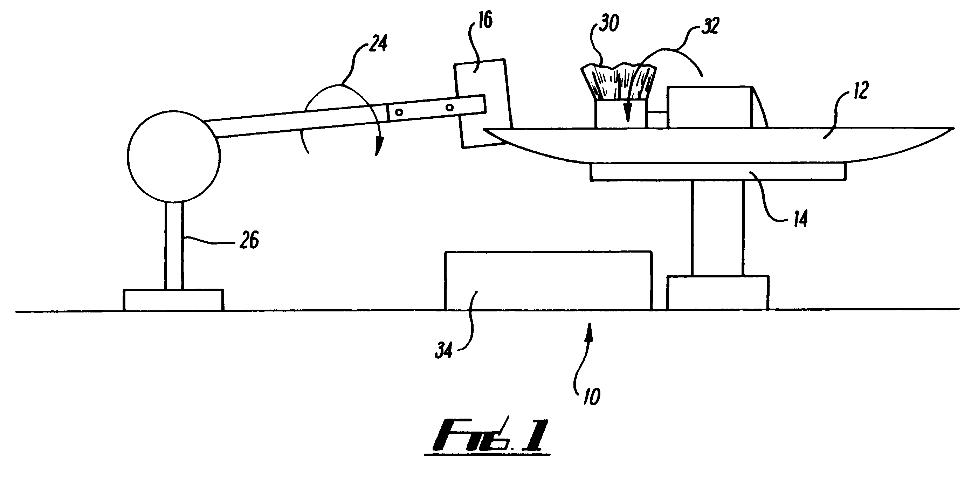

To adjust the precise point to which the edge of the decal will extend the position of the blade 16 can be adjusted by rotating the arm 18 in the direction of the arrow 24. If it is required to provide an upper edge of the plate clear of decal, to for example show a band of plate not bearing the decal around the portion bearing the decal, this can be achieved by rotating the plate 12 through a number of revolutions whilst simultaneously rotating the arm 18 between predetermined positions in a direction as per the arrow 24 at a different speed. For instance the blade 16 may be moved between an orientation as shown in Fig. 1 and an orientation extending substantially horizontal above the plate 12.

This feature is particularly useful if for example the plate 12 is predecorated with an edge band of for example gold or silver or any other colour which may be required. In such an instance a plate with a prefired band could have a decal applied, followed by a single further firing.

The apparatus 10 will generally be located downstream of an automatic decal applying machine, and usually arranged such that plates bearing decals are automatically supplied to the apparatus 10.

There is thus described apparatus which enables a precise edge to edge decal finish to be applied mechanically to an item of flatware. The apparatus is ideally suited to leaving a band around the decal to show a coloured band or the like. The apparatus is of relatively simple construction and can thus be robustly and inexpensively manufactured to provide essentially maintenance free operation. The sprung mounting 20 of the blade 16 enables a decal to be trimmed from a non-circular plate, such as one provided with a scalloped edge.

Various modifications may be made to the apparatus without departing from the scope of the invention. For example the blade can be mounted differently and different mounting means can be provided for the plate. The brush may be arranged differently and a different item could be provided to urge the excess decal into an orientation to enable cutting thereof.

## Claims

1. Decal application apparatus with removing means for removing from an article (12) which has had a decal applied to it which extends beyond the edge of the article, said part of the decal which extends therebeyond, **characterized in that** said removing means comprises:
a blade (16);
means to permit relative rotation between the blade (16) and the article (12); and means (20) for urging the blade (16) against the article (12) during relative rotation therebetween to cause removal of said part of the decal from the article (12).

2. Apparatus according to claim 1, characterised in that a rotatable mounting (14) is provided upon which the article (12) is locatable.

3. Apparatus according to either of claims 1 or 2, characterised in that the blade (16) is provided on a sprung mounting (20) to permit removal of said part of the decal from any non-circular article.

4. Apparatus according to any of claims 1 to 3, characterised in that the inclination of the blade (16) relative to the mounting (14) is variable.

5. Apparatus according to claim 4, characterised in that the inclination of the blade (16) relative to the mounting (14) may be varied during cutting of said part of the decal.

6. Apparatus according to claim 5, characterised in that the apparatus (10) is arranged such that the inclination of the blade (16) repeatedly moves between two predetermined orientations during use.

7. Apparatus according to claim 6, characterised in that said predetermined orientations are adjustable.

8. Apparatus according to any of the preceding claims, characterised in that the apparatus (10) comprises means (30) for urging said part of the decal to a generally horizontal alignment to ease cutting thereof.

9. Apparatus according to claim 8, characterised in that the urging means comprises a brush (30) engageable with said part of the decal.

10. Apparatus according to any of the preceding claims, characterised in that means (34) are provided for receiving said part of the decal following removal from the article (12).

11. Apparatus according to claim 10, characterised in that the receiving means comprises a suction removal arrangement (34).

12. Apparatus according to any of the preceding claims, characterised in that the apparatus (10) is automatically operable to receive a decorated article (12), remove said part of the decal from the article (12), and subsequently release said article (12) to permit another article to be received.

13. Apparatus according to any of the preceding claims, characterised in that the apparatus (10) is loctable downstream of a heat release decal application machine so as to receive decorated articles (12) from said machine.

14. Decal application apparatus according to any of claims 1 to 13 further comprising means for locating a decal on an article such that a part of the decal extends beyond an edge of the article.

15. A method of decorating an area on an article (12), the method comprising applying on to the article (12) a decal of a greater size than said area and removing the part of the decal which does not cover the area and which extends beyond the article (12), **characterized in that** said method comprises:
rotating the article (12) relative to a blade (16), and
urging said blade (16) against the article (12) to cut away said part of the decal.

16. A method according to claim 15, in which the area extends from one edge of the article (12) to another edge.

17. A method according to claims 15 or 16, characterised in that the decal comprises a heat release decal which is applied from a release member of a decal applying apparatus.

18. A method according to claim 17, characterised in that the whole of the decal is applied from the release member such that the decal extends beyond the area.

19. A method according to any of claims 15 to 18 whereby the article is a ceramic article and further comprising the step of subsequently firing the article.

## Patentansprüche

1. Abziehblld-Anbringungsvorrichtung mit Entfernungsmitteln, mit denen man von einem Gegenstand (12), an dem ein Abziehbild angebracht worden ist, das sich über die Kante des Gegenstands hinaus erstreckt, den Teil des Abziehbilds, der sich darüber hinaus erstreckt, entfernt, dadurch gekennzeichnet, daß die Entfernungsmittel aufweisen:
eine Klinge (16);
Mittel, um eine relative Drehung zwischen der Klinge (16) und dem Gegenstand (12) zu ermöglichen; und
Mittel (20), um die Klinge (16) an den Gegenstand (12) während der relativen Drehung zwischen ihnen zu drücken, um das Entfernen des Teils des Abziehbilds von dem Gegenstand (12) zu bewirken.

2. Vorrichtung nach Anspruch 1, dadurch gekennzeichnet, daß ein drehbarer Aufbau (14) vorgesehen ist, auf dem der Gegenstand (12) anordenbar ist.

3. Vorrichtung nach einem der Ansprüche 1 oder 2, dadurch gekennzeichnet, daß die Klinge (16) auf einem federnden Aufbau (20) vorgesehen ist, um das Entfernen des Teils des Abziehbilds von jedem beliebigen nicht-kreisförmigen Gegenstand zu ermöglichen.

4. Vorrichtung nach einem der Ansprüche 1 bis 3, dadurch gekennzeichnet, daß die Neigung der Klinge (16) bezüglich des Aufbaus (14) veränderlich ist.

5. Vorrichtung nach Anspruch 4, dadurch gekennzeichnet, daß die Neigung der Klinge (16) bezüglich des Aufbaus (14) während des Schneidens des Teils des Abziehbilds verändert werden kann.

6. Vorrichtung nach Anspruch 5, dadurch gekennzeichnet, daß die Vorrichtung (10) so angeordnet ist, daß sich die Neigung der Klinge (16) wiederholt zwischen vorbestimmten Ausrichtungen während der Benutzung bewegt.

7. Vorrichtung nach Anspruch 6, dadurch gekennzeichnet, daß die vorbestimmten Ausrichtungen einstellbar sind.

8. Vorrichtung nach einem der vorhergehenden Ansprüche, dadurch gekennzeichnet, daß die Vorrichtung (10) Mittel (30) aufweist, um den Teil des Abziehbilds zu einer im wesentlichen horizontalen Ausrichtung zu drücken, um dessen Schneiden zu erleichtern.

9. Vorrichtung nach Anspruch 8, dadurch gekennzeichnet, daß das Druckmittel eine Bürste (30) aufweist, die mit dem Teil des Abziehbilds in Eingriff gebracht werden kann.

10. Vorrichtung nach einem der vorhergehenden Ansprüche, dadurch gekennzeichnet, daß Mittel (34) zum Aufnehmen des Teils des Abziehbilds nach dem Entfernen von dem Gegenstand (12) vorgesehen sind.

11. Vorrichtung nach Anspruch 10, dadurch gekennzeichnet, daß das Aufnahmemittel eine Saugentfernungs-Anordnung (34) aufweist.

12. Vorrichtung nach einem der vorhergehenden Ansprüche, dadurch gekennzeichnet, daß die Vorrichtung (10) automatisch betreibbar ist, um einen verzierten Gegenstand (12) aufzunehmen, den Teil des Abziehbilds von dem Gegenstand (12) zu entfernen und daraufhin den Gegenstand (12) loszulassen, um die Aufnahme eines weiteren Gegenstands zu ermöglichen.

13. Vorrichtung nach einem der vorhergehenden Ansprüche, dadurch gekennzeichnet, daß die Vorrichtung (10) stromab von einer Wärmeabgabe-Abziehbild-Auftragungsmaschine anordenbar ist, um verzierte Gegenstände (12) von der Maschine zu empfangen.

14. Abziehbild-Anbringungsvorrichtung nach einem der Ansprüche 1 bis 13, welche Mittel zum Anordnen eines Abziehbilds auf einem Gegenstand aufweist, so daß sich ein Teil des Abziehbilds über den Rand des Gegenstands hinaus erstreckt.

15. Verfahren zum Verzieren eines Bereichs auf einem Gegenstand (12), wobei bei dem Verfahren auf den Gegenstand (12) ein Abziehbild mit einer größeren Abmessung als der Bereich aufgetragen wird und der Teil des Abziehbilds, der den Bereich nicht abdeckt und sich über den Gegenstand (12) hinaus erstreckt, entfernt wird, dadurch gekennzeichnet, daß das Verfahren aufweist:
Drehen des Gegenstands (12) bezüglich einer Klinge (16), und
Drücken der Klinge (16) an den Gegenstand (12), um den Teil des Abziehbilds abzuschneiden.

16. Verfahren nach Anspruch 15, nach welchem sich der Bereich von der einen Kante des Gegenstands (12) zu der anderen Kante erstreckt.

17. Verfahren nach Anspruch 15 oder 16, dadurch gekennzeichnet, daß das Abziehbild ein Wärmeabgabe-Abziehbild aufweist, das von einem Freigabeelement einer Abziehbild-Auftragungsvorrichtung angebracht wird.

18. Verfahren nach Anspruch 17, dadurch gekennzeichnet, daß das gesamte Abziehbild von dem Freigabeelement so angebracht wird, daß sich das Abziehbild über den Bereich hinaus erstreckt.

19. Verfahren nach einem der Ansprüche 15 bis 18, bei dem der Gegenstand ein keramischer Gegenstand ist und außerdem einen Schritt zum anschließenden Drehen des Gegenstands aufweist.

## Revendications

1. Dispositif d'application de décalcomanie comportant des moyens de retrait destinés à opérer le retrait, sur un objet (12) sur lequel a été appliquée une décalcomanie qui s'étend au-delà du bord de l'objet, de la partie de la décalcomanie qui s'étend au-delà de celui-ci, caractérisé en ce que les moyens de retrait comprennent :
une lame (16) ;
des moyens permettant une rotation relative entre la lame (16) et l'objet (12) ; et des moyens (20) permettant de pousser la lame (16) contre l'objet (12) lors de la rotation relative entre eux afin d'entraîner le retrait, de l'objet (12), de la partie de décalcomanie.

2. Dispositif selon la revendication 1, caractérisé en ce qu'est prévu un support rotatif (14) sur lequel l'objet (12) peut être placé.

3. Dispositif selon la revendication 1 ou 2, caractérisé en ce que la lame (16) est montée sur un support à ressorts (20) afin de permettre de retirer la partie de décalcomanie de tout objet non-circulaire.

4. Dispositif selon l'une quelconque des revendications 1 à 3, caractérisé en ce que l'inclinaison de la lame (16) par rapport au support (14) est variable.

5. Dispositif selon la revendication 4, caractérisé en ce que l'inclinaison de la lame (16) par rapport au support (14) peut être modifiée lors de la découpe de la partie de décalcomanie.

6. Dispositif selon la revendication 5, caractérisé en ce que le dispositif (10) est conçu de telle sorte que l'inclinaison de la lame (16) change de façon répétée entre deux orientations prédéterminées, en cours d'utilisation.

7. Dispositif selon la revendication 6, caractérisé en ce que les orientations prédéterminées sont réglables.

8. Dispositif selon l'une quelconque des revendications précédentes, caractérisé en ce que le dispositif (10) comprend des moyens (30) servant à amener la partie de décalcomanie dans un alignement globalement horizontal, afin de faciliter sa découpe.

9. Dispositif selon la revendication 8, caractérisé en ce que les moyens de poussée comprennent une brosse (30) susceptible de coopérer avec la partie de décalcomanie.

10. Dispositif selon l'une quelconque des revendications précédentes, caractérisé en ce que des moyens (34) sont prévus pour recevoir la partie de décalcomanie suite à son retrait de l'objet (12).

11. Dispositif selon la revendication 10, caractérisé en ce que les moyens de réception comprennent un dispositif de retrait par aspiration (34).

12. Dispositif selon l'une quelconque des revendications précédentes, caractérisé en ce que le dispositif (10) peut fonctionner de façon automatique pour recevoir un objet décoré (12), retirer la partie de décalcomanie de l'objet (12), et ensuite libérer l'objet (12) afin de permettre à un autre objet d'être reçu.

13. Dispositif selon l'une quelconque des revendications précédentes, caractérisé en ce que le dispositif (10) peut être situé en aval d'une machine à appliquer des décalcomanies thermoapplicables, pour recevoir des objets décorés (12) provenant de cette machine.

14. Dispositif d'application de décalcomanie selon l'une quelconque des revendications 1 à 13, comprenant, en outre, des moyens permettant de placer une décalcomanie sur un objet de telle sorte qu'une partie de la décalcomanie s'étende au-delà d'un bord de l'objet.

15. Procédé de décoration d'une zone sur un objet (12), le procédé comprenant le fait d'appliquer, sur l'objet (12), une décalcomanie d'une taille supérieure à la zone, et de retirer la partie de décalcomanie qui ne couvre pas la zone et qui s'étend au-delà de l'objet (12), caractérisé en ce que le procédé comprend : le fait de faire tourner l'objet (12) par rapport à une lame (16), et le fait de pousser la lame (16) contre l'objet (12) pour découper la partie de décalcomanie.

16. Procédé selon la revendication 15, dans lequel la zone s'étend d'un bord de l'objet (12) à un autre bord.

17. Procédé selon la revendication 15 ou 16, caractérisé en ce que la décalcomanie comprend une décalcomanie thermoapplicable qui est appliquée par un organe de transfert d'une machine à appliquer des décalcomanies.

18. Procédé selon la revendication 17, caractérisé en ce que la totalité de la décalcomanie est appliquée par l'organe de transfert de telle sorte que la décalcomanie s'étende au-delà de la zone.

19. Procédé selon l'une quelconque des revendications 15 à 18, dans lequel l'objet est un objet en céramique et comprenant, en outre, l'étape de cuisson ultérieure de l'objet.
